# EUROPEAN PATENT SPECIFICATION

(11) **EP 2 990 131 B1**
(45) Date of publication and mention of the grant of the patent: **07.11.2018**
(21) Application number: 14182997.8
(22) Date of filing: 01.09.2014
(51) Int. Cl.: B09B 3/00, A62D 3/40, F23G 5/16, F23G 7/00, A62D 101/41

(54) **A method for converting an asbestos-containing waste product into a safe asbestos-free product**
Verfahren zur Umwandlung eines asbesthaltigen Abfallproduktes in ein sicheres asbestfreies Produkt
Procédé permettant de convertir un produit contenant de l'amiante en un produit exempt d'amiante sécurisé

(43) Date of publication of application: 02.03.2016
(73) Proprietor: D-Nature B.V., 7524 AE Enschede (NL)
(72) Inventor: Reef, Antonius Gerhard Anastasius, 7556 PE Hengelo (NL)
(74) Representative: De Vries & Metman

(56) References cited:
- EP-A1- 1 277 527
- EP-A1- 2 027 943
- US-A1- 2003 225 308
- MARIANNE ROLLIN: "Lasmas thermiques pour la destructon de déchets amiantiféres", REE: REVUE GENERALE DE L'ELECTRICITE ET DE L'ELECTRONIQUE, REVUE GENERALE DE L'ELECTRICITE S.A, FR, vol. 3, 1 January 1995 (1995-01-01), pages 37-40, XP008082420, ISSN: 1265-6534

## Description

The present invention relates to a method for converting an asbestos-containing waste product into a safe asbestos-free product, comprising the steps of supplying a sealed asbestos-containing waste product, placing the sealed product in a substantially closed chamber, removing the seal from the product and heating the product at a temperature between 600 and 1200 °C during a predetermined period.

A variety of products containing asbestos fibers were used in the past because of their excellent insulating and fire-resistant properties, for example building materials. When asbestos was used for its resistance to fire or heat, the fibers were often mixed with cement, resulting in asbestos cement. It is known that prolonged inhalation of asbestos fibers can cause serious illnesses such as asbestosis. Therefore, the use of asbestos has been restricted in many countries. The demolition of a building which contains a large amount of asbestos-based materials is mostly deconstructed piece by piece. The asbestos-containing demolition materials are wrapped at the location of demolition and transported to a recycling site. In the Netherlands about 80,000 tons of asbestos-based demolition materials, such as corrugated plates and sewer pipes, must be processed annually.

EP 1 277 527 is related to a method for converting an asbestos-containing waste product into a safe asbestos-free product. The asbestos-containing waste product is supplied to a tunnel kiln. During a predetermined residence time the waste product is exposed to a temperature of about 600-1000 °C. As a consequence, the asbestos fibers contained in the asbestos-containing waste product are dehydrated. Due to the release of water the actual chemical structure of the asbestos fibers is essentially retained, and a pseudomorphic water-free fiber structure is produced. It appears that the fibers become brittle after the heat treatment. The resulting water-free fiber structure is destroyed, forming the physiologically harmless asbestos-free product, which has a cementitious chemical composition with the character of a secondary raw material suitable for the cement industry, for example. The resulting harmless product can also be used in non-asbestos building material products, for example as a filler.

The asbestos-containing waste product is fed into the kiln as a sealed package. The package includes the waste product enveloped by a covering such as a plastic film, often called a big bag. The covering of a sealed product is not removed before it is inside the kiln.

The asbestos-containing waste products arriving at the site where the products are heat treated, may have varying compositions. The content of the sealed package is often not known exactly.

EP 2 027 943 is related to an industrial process for the temperature induced, complete transformation of packages of plastic material containing roofing cement-asbestos slates or other asbestos containing wastes such as friable asbestos. The industrial firing process ensures a complete transformation of both the package and the asbestos containing material via a decomposition reaction of the organic compounds and a decomposition and recrystallization of all the inorganic mineral phases including the asbestos minerals.

The present invention aims to provide a method for converting an asbestos-containing waste product into a safe asbestos-free product wherein the risk of damaging the closed chamber or kiln is minimized.

For this purpose, between the steps of removing the seal and heating the product, the product is dried at a temperature below 500 °C during more than an hour, preferably more than two hours.

Due to the relatively long period at relatively low temperature any moisture contained in the supplied product evaporates gradually. This is advantageous since a too rapid heating could lead to explosive evaporations which increases the risk of damaging the chamber. Since the composition and moisture content of the supplied product may vary it is relevant to select a safe margin. It is noted that the maximum temperature to which the product is exposed may be below the melting temperature of asbestos.

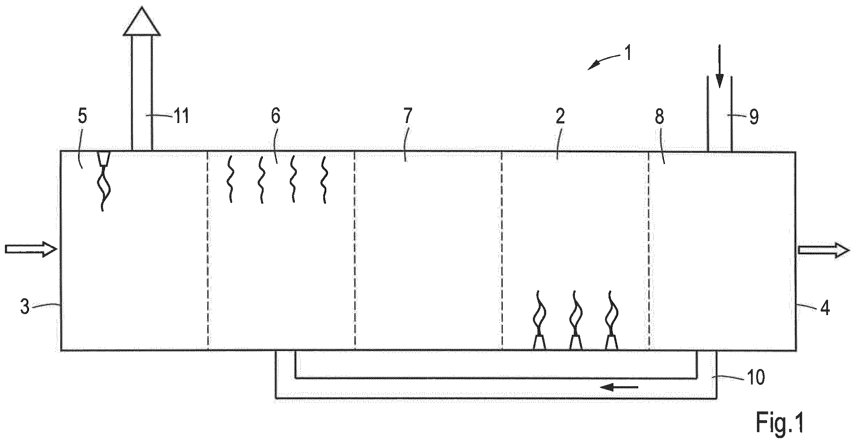

Fig. 1 is an illustrative view of a continuous kiln, illustrating an embodiment of the method according to the invention.

Fig. 1 shows a diagram of a continuous kiln 1, which illustrates an embodiment of the method according to the invention. The continuous kiln 1, also called a tunnel kiln or tunnel oven, is a long structure in which only a central fire zone 2 is directly heated. From a cool entrance 3 of the continuous kiln 1, a product is slowly transported through the kiln 1, and its temperature is increased steadily as it approaches the fire zone 2 of the kiln 1. From there, its transportation continues and the temperature is reduced until it exits the kiln 1 at a kiln exit 4.

An asbestos-containing waste product that is heat-treated in the kiln 1 is sealed and transported to the kiln 1 from a site where a building is deconstructed. The seal is not removed from the product before it is inside the kiln 1. Before the product is transported into the kiln 1 via the entrance 3 it is placed on a mobile carrier (not shown) on which the product remains during its travel through the kiln 1.

In the embodiment as illustrated in Fig. 1 the kiln 1 comprises five successive zones which have different functions. In a seal removing zone 5 the seal is removed from the sealed asbestos-containing waste product. In practice the seal may be made of plastic and a burner in the seal removing zone 5 may burn away the seal such that the asbestos-containing waste product is directly exposed to the environment inside the kiln 1.

In the next step the product enters a drying zone 6 in which the product is dried at a temperature below 500 °C during more than two hours. As a consequence, any moisture contained in the product evaporates gradually. For some products that are already sufficient dry this zone might be skipped, but the moisture content of the product as supplied is often unknown. In case of a relatively high moisture content a too rapid heating could lead to explosions in the product due to too rapid evaporations. The temperature in the drying zone 6 may be 150-250 °C at the start of the drying zone 6 and 350-450 °C at the end of the drying zone 6 in practice. In case of a mass flow of the product of 5-15 tons/h, the residence time in the drying zone 6 may be 5-25 hours. The temperature that the product meets during travelling through the drying zone 6 may rise from 150-250 °C up to 350-450 °C.

Subsequently, the dried product enters a heating zone 7 in which the temperature gradually increases above 500 °C, after which the product arrives in the fire zone 2 where the maximum temperature between 600 and 1200 °C is reached. The high temperature is created by gas burners, which may be fed by natural gas or biogas, or the like. In the fire zone 2 the product is converted into a safe asbestos-free product.

The residence time in the heating zone 7 in case of a mass flow of the product of 5-15 tons/h may be 5-25 hours, whereas the temperature in the heating zone 7 may rise from 350-450°C at the start of the heating zone 7 up to 1000-1200 °C at the end of the heating zone 7 and at the start of the fire zone 2. The temperature in the fire zone 2 remains substantially constant and the residence time of the product in the fire zone 2 may be 5-25 hours.

The final zone in the kiln 1 is a cooling zone 8 where the product is cooled by means of cooling air that is supplied from outside the kiln 1 through an inlet air tube 9. The cooling air is heated by the product and transferred to the drying zone 6 via a hot air pipe 10. The residence time in the cooling zone 8 when the mass flow of the product is 5-15 tons/h may be 15-25 hours and the temperature in the cooling zone 8 decreases from 1000-1200 °C at the start of the cooling zone 8 down to ambient temperature at the exit 4.

Fig. 1 further illustrates that the exhaust gases from burning the seal in the seal removing zone 5 are transferred via an exhaust pipe including an afterburner 11 and a filter to the environment. It is noted that any gases which are exhausted from the kiln to the environment are filtered.

The residence time of the product in the kiln 1 between the entrance 3 and the exit 4 may be more than 60 hours. In a practical situation the speed of mobile carriers entering the kiln 1 may be 1.5 carrier per hour, for example. The total length of the kiln 1 between its entrance 3 and exit 4 may be 175 m, but a shorter or longer kiln is conceivable, as well.

## Claims

1. A method for converting an asbestos-containing waste product into a safe asbestos-free product, comprising the steps of supplying a sealed asbestos-containing waste product, placing the sealed product in a substantially closed chamber (1), heating the product at a temperature between 600 and 1200 °C during a predetermined period, **characterized in that**, prior to heating the product to the temperature between 600 and 1200°C, the method further comprises a step of removing the seal from the product prior to a step where the product is dried at a temperature below 500 °C during more than an hour, preferably more than two hours.

2. A method according to claim 1, wherein the closed chamber comprises a continuous kiln (1) having a seal removing zone (5) where the seal is removed from the product, a drying zone (6) where the non-sealed product is dried and a fire zone (2) where the product is heated between 600 and 1200 °C during a predetermined period.

3. A method according to claim 2, wherein the seal is removed by means of a burner.

4. A method according to claim 3, wherein the exhaust gases from burning the seal are transferred to the environment via an afterburner.

5. A method according to one of the claims 2-4, wherein the continuous kiln (1) also has a cooling zone (8) where the product is cooled after the heating step by means of cooling air that is supplied from outside the kiln (1).

6. A method according to claim 5, wherein the cooling air that is heated by the product is transferred to the drying zone (6) for drying the product after the step of removing the seal.

7. A method according to claim 2, wherein the mass flow of the product through the kiln (1) is 5-15 tons/h and the temperature in the drying zone (6) rises from 150-250 °C at the start of the drying zone (6) up to 350-450 °C, whereas the travel time of the product through the drying zone (6) amounts 5-25 hours.

## Patentansprüche

1. Verfahren zum Umwandeln eines Asbest-enthaltenden Abfallprodukts in ein sicheres asbestfreies Produkt, das die Schritte aufweist Anliefern eines abgedichteten Asbest-enthaltenden Abfallprodukts, Anordnen des abgedichteten Produkts in einer im Wesentlichen geschlossenen Kammer (1), Erwärmen des Produkts auf eine Temperatur zwischen 600 und 1200 °C für eine bestimmte Zeitspanne,
**dadurch gekennzeichnet, dass** vor dem Erwärmen des Produkts auf die Temperatur zwischen 600 und 1200 °C das Verfahren weiterhin einen Schritt des Entfernens der Abdichtung von dem Produkt vor einem Schritt aufweist, in dem das Produkt bei einer Temperatur unter 500 °C länger als eine Stunde, vorzugsweise länger als zwei Stunden, getrocknet wird.

2. Verfahren nach Anspruch 1, wobei die geschlossene Kammer einen durchgehenden Ofen (1) aufweist, der eine Zone (5) zum Entfernen einer Abdichtung aufweist, in der die Abdichtung von dem Produkt entfernt wird, eine Trocknungszone (6), in der das nicht abgedichtete Produkt getrocknet wird, und eine Feuerzone (2), in der das Produkt für eine bestimmte Zeitspanne auf 600 bis 1200 °C erwärmt wird.

3. Verfahren nach Anspruch 2, wobei die Abdichtung mithilfe eines Brenners entfernt wird.

4. Verfahren nach Anspruch 3, wobei die Abgase aus dem Verbrennen der Abdichtung an die Umgebung über einen Nachbrenner übertragen werden.

5. Verfahren nach einem der Ansprüche 2 bis 4, wobei der durchgängige Ofen (1) auch eine Abkühlungszone (8) aufweist, in der das Produkt nach dem Erwärmungsschritt mittels Kaltluft abgekühlt wird, die von außerhalb des Ofens (1) zugeführt wird.

6. Verfahren nach Anspruch 5, wobei die Kaltluft, die durch das Produkt erwärmt wird, an die Trocknungszone (6) übertragen wird, um das Produkt nach dem Schritt des Entfernens der Abdichtung zu trocknen.

7. Verfahren nach Anspruch 2, wobei der Massenfluss des Produkts durch den Ofen (1) 5 bis 15 t/h beträgt und die Temperatur in der Trocknungszone (6) von 150 bis 250 °C zu Beginn der Trocknungszone (6) auf 350 bis 450 °C ansteigt, wobei die Durchlaufzeit des Produkts durch die Trocknungszone (6) zwischen 5 bis 25 Stunden beträgt.

## Revendications

1. Procédé de conversion d'un produit de déchet contenant de l'amiante en un produit sain sans amiante, comprenant les étapes d'amenée d'un produit de déchet contenant de l'amiante scellé, de mise en place du produit scellé dans une chambre sensiblement close (1), de chauffage du produit à une température entre 600 et 1 200 °C pendant une période prédéterminée, **caractérisé en ce que**, avant le chauffage du produit à la température entre 600 et 1 200 °C, le procédé comprend en outre une étape d'élimination du scellé du produit avant une étape où le produit est séché à une température inférieure à 500 °C pendant plus d'une heure, de préférence plus de deux heures.

2. Procédé selon la revendication 1, dans lequel la chambre close comprend un four continu (1) ayant une zone d'élimination de scellé (5) où le scellé est éliminé du produit, une zone de séchage (6) où le produit non scellé est séché et une zone de cuisson (2) où le produit est chauffé entre 600 et 1 200 °C pendant une période prédéterminée.

3. Procédé selon la revendication 2, dans lequel le joint est éliminé au moyen d'un brûleur.

4. Procédé selon la revendication 3, dans lequel les gaz d'échappement issus de la combustion du joint sont transférés à l'environnement via un dispositif de postcombustion.

5. Procédé selon l'une des revendications 2 à 4, dans lequel le four continu (1) comporte également une zone de refroidissement (8) où le produit est refroidi après l'étape de séchage au moyen d'air de refroidissement qui est amené depuis l'extérieur du four (1).

6. Procédé selon la revendication 5, dans lequel l'air de refroidissement qui est chauffé par le produit est transféré à la zone de séchage (6) pour sécher le produit après l'étape d'élimination du scellé.

7. Procédé selon la revendication 2, dans lequel le débit massique du produit à travers le four (1) est de 5 à 15 tonnes/h et la température dans la zone de séchage (6) s'élève de 150 à 250 °C au début de la zone de séchage (6) jusqu'à 350 à 450 °C, tandis que le temps de parcours du produit à travers la zone de séchage (6) s'élève à 5 à 25 heures.
